# EUROPÄISCHE PATENTSCHRIFT

(11) **EP 1 291 147 B1**
(45) Veröffentlichungstag und Bekanntmachung des Hinweises auf die Patenterteilung: **31.03.2004**
(21) Anmeldenummer: 01119903.1
(22) Anmeldetag: 17.08.2001
(51) Int. Cl.: B29C 45/17

(54) **Schliesseinheit einer Drei-Platten-Spritzgiessmaschine**
Closing unit for a three-platen injection moulding machine
Unité de fermeture pour une machine à mouler par injection à trois plateaux

(43) Veröffentlichungstag der Anmeldung: 12.03.2003
(73) Patentinhaber: Ferromatik Milacron Maschinenbau GmbH, D-79364 Malterdingen (DE)
(72) Erfinder: Koch, Michael Dr., 79100 Freiburg (DE); Grundmann, Kai, 79211 Denzlingen (DE)
(74) Vertreter: Grättinger & Partner (GbR)

(56) Entgegenhaltungen:
- EP-A- 0 931 974
- US-A- 3 508 300
- US-A- 5 297 953
- PATENT ABSTRACTS OF JAPAN vol. 13, no. 178 (M-819), 26. April 1989 (1989-04-26) & JP 01 009714 A (FANUC LTD), 13. Januar 1989 (1989-01-13)
- PATENT ABSTRACTS OF JAPAN vol. 13, no. 223 (M-829), 24. Mai 1989 (1989-05-24) & JP 01 038215 A (FANUC LTD), 8. Februar 1989 (1989-02-08)

## Beschreibung

Die vorliegende Erfindung betrifft eine Schließeinheit einer Drei-Platten-Spritzgießmaschine, umfassend eine Düsenplatte, eine bewegliche Formaufspannplatte und eine Endplatte, wobei die Düsenplatte und die Endplatte über Säulen, auf welchen die bewegliche Formaufspannplatte verschiebbar geführt ist, miteinander verbunden sind und wobei zwischen der Endplatte und der beweglichen Formauspannplatte eine Kniehebelanordnung vorgesehen ist, auf die eine Antriebseinheit wirkt.

Schließeinheiten der vorstehend angegebenen Art sind aufgrund ihrer Verwendung in handelsüblichen Spritzgießmaschinen bekannt. Auch die EP 0650817 A1 offenbart eine Schließeinheit der eingangs genannten Art.

Gegenüber hydraulischen Schließeinheiten zeichnen sich mechanische Schließeinheiten mit einer Kniehebelanordnung insbesondere durch eine besonders günstige Schließbewegungs-Schließkraft-Charakteristik aus. Denn bei geeigneter konstruktiver Gestaltung der Kniehebelanordnung nimmt gegen Ende der Schließbewegung die mögliche Schließkraft überproportional zu, bei einer entsprechend reduzierten Geschwindigkeit der Schließbewegung. Dies gestattet vergleichsweise hohe Schließkräfte bei relativ klein dimensionierten Antriebseinheiten für die Schließeinheit. Trotz dieses unübersehbaren Vorteils bestehen seitens der Anwender jedoch zum Teil Vorbehalte gegenüber Spritzgießmaschinen mit Schließeinheiten der eingangs genannten Art, insbesondere im Falle der geplanten Verwendung der Spritzgießmaschine zur Herstellung kontaminationsempfindlicher Produkte wie beispielsweise CDs und DVDs.

Der vorliegenden Erfindung liegt demgemäß die Aufgabe zugrunde, eine Schließeinheit der gattungsgemäßen Art zu schaffen, die bei geringstmöglichem Mehraufwand gegenüber bekannten Schließeinheiten den Einsatz von mit ihr ausgerüsteten Spritzgießmaschinen auch zur Herstellung von Spritzgießerzeugnissen mit einer hohen Empfindlichkeit gegenüber Verunreinigungen gestattet.

Gelöst wird diese Aufgabe gemäß der vorliegenden Erfindung dadurch, daß sich bei einer Schließeinheit der eingangs genannten Art zwischen der Endplatte und der beweglichen Formaufspannplatte ein längenveränderbares Kapselelement erstreckt. Die erfindungsgemäße Schließeinheit zeichnet sich mit anderen Worten dadurch aus, daß die Kniehebelanordnung von einem Kapselelement umgeben ist, das einerseits an der Endplatte und andererseits an der beweglichen Formaufspannplatte angeschlossen ist und das zur Kompensation des sich verändernden Abstandes zwischen der Endplatte und der beweglichen Formaufspannplatte längenveränderbar ausgeführt ist. Ein solches erfindungsgemäß vorgesehenes Kapselelement wirkt sich in vielfacher Hinsicht günstig aus. Besonders hervorzuheben ist, daß das Kapselelement geeignet ist, Luftverwirbelungen in der näheren Umgebung der Spritzgießmaschine, wie sie durch die raschen Bewegungen der verschiedenen Bauteile der Kniehebelanordnung hervorgerufen werden können und durch die Kleinstpartikel in der näheren Umgebung der Spritzgießmaschine aufgewirbelt werden können, zu kontrollieren und/oder maßgeblich zu reduzieren. Des weiteren wird durch das erfindungsgemäß vorgesehene Kapselelement wirksam verhindert, daß Ölnebel, wie er bei ölgeschmierten Kniehebelanordnungen, die bei Hochleistungs-Spritzgießmaschinen verbreitet eingesetzt werden, im Bereich der Gelenke entstehen kann, in die Umgebung der Spritzgießmaschine gelangt. Indem das Kapselelement entsprechende Ölnebel zurückhält, trägt sie nicht nur zu einer Steigerung der Qualität der Spritzgießerzeugnisse bei; sie stellt vielmehr auch ein wirksames Mittel gegen die Belästigung und ggf. gesundheitliche Beeinträchtigung der Bedienperson der entsprechenden Spritzgießmaschine dar. Hinzu kommt, daß insbesondere im Falle größerer aufgefangener Ölnebelmengen deren Rückgewinnung und ggf. - nach einer entsprechenden Aufbereitung - Wiederverwendung möglich ist; dies ist unter Umweltgesichtspunkten besonders günstig.

Ein weiterer Vorteil der vorliegenden Erfindung ist darin zu sehen, daß sie neue Möglichkeiten der Druckölschmierung der Kniehebelanordnung ermöglicht. Insbesondere gestattet die vorliegende Erfindung dabei, von der gegenwärtigen Tendenz zu längeren Schmierungsintervallen bei größeren Schmierölmengen abzurücken zugunsten kürzerer Schmierungsintervalle bei geringeren Schmierölmengen. In besonders gelagerten Anwendungsfällen ist sogar der Übergang von einer intermittierenden Schmierung auf eine kontinuierliche Ölumlaufschmierung denkbar.

Gemäß einer ersten bevorzugten Weiterbildung ist das erfindungsgemäß vorgesehene Kapselelement als Faltenbalg ausgeführt. Ein wesentlicher Vorteil dieser Weiterbildung sind die besonders niedrigen bewegten Massen. Zudem läßt sich hier bei Bedarf mit geringstem Aufwand eine zuverlässige Dichtheit des Kapselelements sicherstellen.

Eine andere, ebenfalls bevorzugte Weiterbildung der Erfindung zeichnet sich dadurch aus, daß das Kapselelement als eine mindestens zwei teleskopisch zueinander verschiebbare tunnelartige Bleche umfassende Verkleidung ausgeführt ist. Hierbei erweist sich die mögliche glattflächige Ausführung der Verkleidung als vorteilhaft.

Gemäß einer anderen bevorzugten Weiterbildung der Erfindung ist das Kapselelement in seinem unteren Bereich offen ausgeführt. Die untere Öffnung des Kapselelements kann dabei insbesondere oberhalb einer Auffangwanne angeordnet sein. Jener Auffangwanne werden dabei die von dem Kapselelement aufgefangenen Ölnebel zugeführt. Ersichtlich ist dies unabhängig von der baulichen Ausführung des Kapselelements als Faltenbalg, Blechverkleidung oder sonstiges Kapselelement günstig. Im Bereich der Öffnung des Kapselelements können dabei besonders bevorzugt Strömungsleitbleche vorgesehen sein, die das beim Schließen der Schließeinheit in das Kapselelement eintretende Luftvolumen und/oder das bei Öffnen der Schließeinheit aus dem Kapselelement austretende Luftvolumen hinsichtlich der Strömungsrichtung und sonstigen Strömungsverhältnisse gezielt beeinflussen.

Die vorstehend erläuterte, unten offene Ausführung des Kapselelements ist zwar im allgemeinen ausreichend und dabei besonders günstig; sie ist jedoch keineswegs zwingend. Vielmehr kommt im Rahmen der vorliegenden Erfindung durchaus auch in Betracht, das Kapselelement allseits geschlossen mit einem Bodenablauf für aufgefangene Ölnebel und einer definierten Belüftung zur Ventilation des von dem Kapselelement umschlossenen Raumes vorzusehen. Diese Ausführung bietet sich insbesondere bei höchsten Anforderungen an die Qualität der Spritzgießerzeugnisse an.

Gemäß einer abermals anderen bevorzugten Weiterbildung der Erfindung stützt sich das Kapselelement zwischen der Endplatte und der beweglichen Formaufspannplatte auf den Säulen ab. Bei einer solchen Abstützung ergeben sich reduzierte Anforderungen an die Eigensteifigkeit des Kapselelements, so daß dieses vergleichsweise leicht ausgeführt werden kann. Dies ist wiederum von Vorteil im Hinblick auf die bewegten Massen sowie die Wartungsfreundlichkeit der mit der erfindungsgemäßen Schließeinheit ausgestatteten Spritzgießmaschine.

Die Längenveränderbarkeit des erfindungsgemäß vorgesehenen Kapselelements ist bevorzugt auf einen Teilbereich seiner Länge beschränkt. In diesem Sinne kann insbesondere vorgesehen sein, daß im Falle der Ausführung des Kapselelements als Blechverkleidung das mit der beweglichen Formaufspannplatte verbundene Blechteil in Bewegungsrichtung nur geringfügig größer ist als der maximale Hub der beweglichen Formaufspannplatte. Dies trägt wiederum dazu bei, die bewegten Massen möglichst klein zu halten.

Im folgenden wird die vorliegende Erfindung anhand eines in der Zeichnung veranschaulichten bevorzugten Ausführungsbeispiels näher erläutert. Dabei zeigt
- Fig. 1: eine Schließeinheit nach dem Stand der Technik in ihrer geschlossenen Stellung in perspektivischer Ansicht,
- Fig. 2: eine Schließeinheit nach der vorliegenden Erfindung in ihrer geschlossenen Stellung in perspektivischer Ansicht und
- Fig. 3: die Schließeinheit nach Fig. 2 in ihrer geöffneten Stellung in perspektivischer Ansicht.

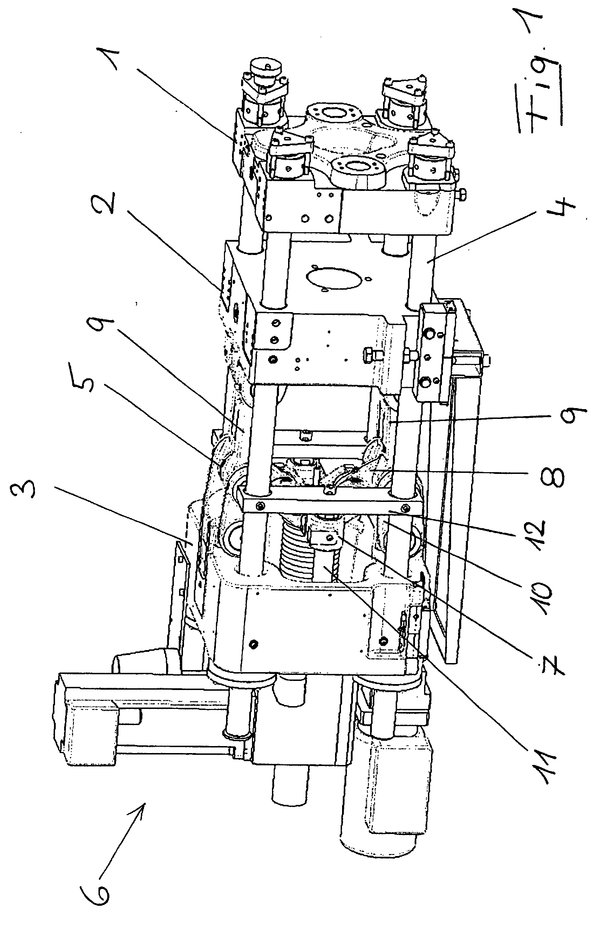

Die in Fig. 1 veranschaulichte, dem Stand der Technik entsprechende Schließeinheit umfaßt in als solches bekannter Weise drei Platten, nämlich eine Düsenplatte 1, eine bewegliche Formaufspannplatte 2 und eine Endplatte 3. Die Endplatte 3 ist mit der Düsenplatte 2 über vier Säulen 4 starr verbunden. Die bewegliche Formaufspannplatte 2 ist auf jenen Säulen 4 verschiebbar geführt. Die Verschiebung der beweglichen Formaufspannplatte 2 wird dabei durch eine Kniehebelanordnung 5 bewirkt, die zwischen der beweglichen Formaufspannplatte 2 und der Endplatte 3 angeordnet ist. Der Kniehebelanordnung 5 ist eine Antriebseinheit 6 zugeordnet, die über den Gelenkkopf 7 und die mit diesem verbundenen Zwischenlenker 8 auf die Lenker 9 und 10 der Kniehebelanordnung 5 einwirkt. Der Gelenkkopf 7 ist dabei auf zwei Führungssäulen 11 geführt, die einerseits in der Endplatte 3 und andererseits jeweils in einer Traverse 12, welche an jeweils zwei Säulen 4 fixiert ist, festgelegt sind.

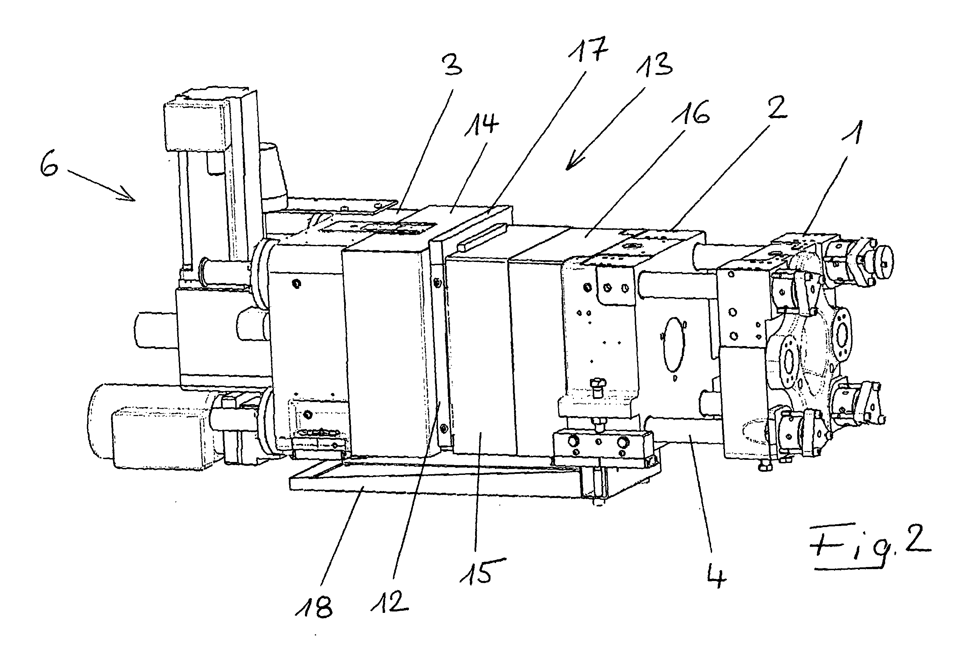

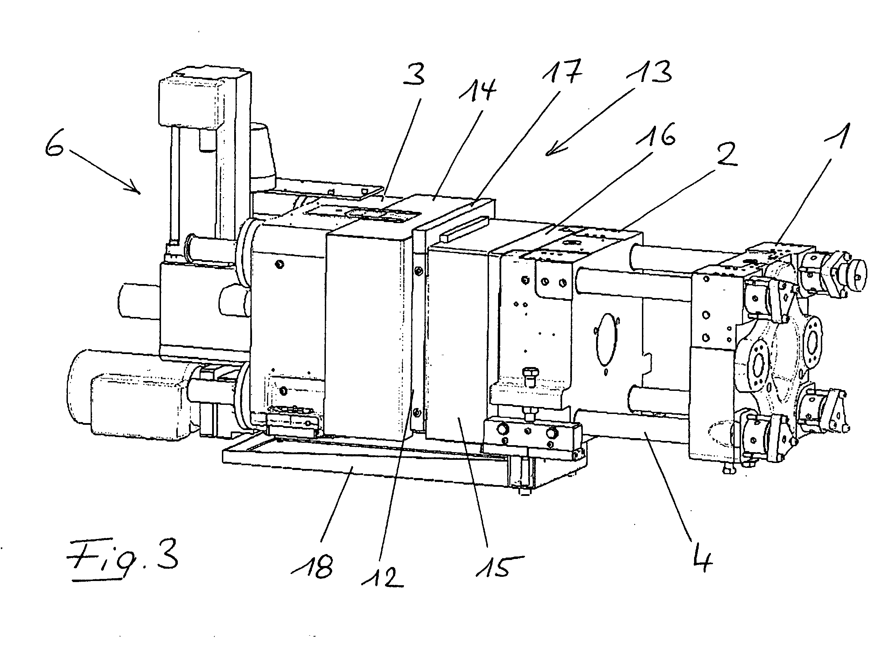

Insoweit sowie im Umfang weiterer vorstehend nicht erläuterter Details entsprechen sowohl die bekannte Schließeinheit nach Fig. 1 wie auch die erfindungsgemäße Schließeinheit nach den Figuren 2 und 3 dem Stand der Technik, so daß es weiterer Erläuterungen nicht bedarf.

Das in den Fig. 2 und 3 veranschaulichte Ausführungsbeispiel einer Schließeinheit nach der vorliegenden Erfindung unterscheidet sich von der Schließeinheit nach Fig. 1 durch ein die Kniehebelanordnung 5 umschließendes Kapselelement 13. Jenes Kapselelement 13 ist als eine dreiseitig geschlossene, in ihrem unteren Bereich offene Verkleidung ausgeführt. Sie umfaßt drei tunnelartige Blechteile, nämlich ein erstes Blechteil 14, das einerseits mit der Endplatte 3 und andererseits mit den beiden Traversen 12 verbunden ist, ein zweites Blechteil 15, das auf der dem Blechteil 14 gegenüberliegenden Seite fest mit den beiden Traversen 12 verbunden ist, sowie ein drittes Blechteil 16, das fest mit der beweglichen Formaufspannplatte 2 verbunden ist. Die beiden zuletzt genannten Blechteile 15 und 16 sind dabei teleskopisch zueinander verschiebbar, wobei das mit der beweglichen Formaufspannplatte 2 verbundene Blechteil 16 dichtend in dem mit den Traversen 12 verbundenen Blechteil 15 geführt ist.

Das Kapselelement 13 umfaßt darüber hinaus eine Abschlußleiste 17, die sich zwischen den oberen Enden der beiden Traversen 12 erstreckt und den Spalt zwischen den beiden Blechteilen 14 und 15 überbrückt. Die Befestigungsmittel für die einzelnen Blechteile 14, 15 und 16 an den zugeordneten Bauteilen der Schließeinheit sind so gewählt, daß die Blechteile zur Durchführung von Wartungsarbeiten mit geringem Aufwand entfernt werden können.

Die untere Öffnung des Kapselelements 13 ist oberhalb einer Auffangwanne 18 angeordnet, aus der von dem Kapselelement aufgefangene und anschließend herabgefallene Partikel und Tröpfchen regelmäßig entfernt werden.

## Patentansprüche

1. Schließeinheit einer Drei-Platten-Spritzgießmaschine, umfassend eine Düsenplatte (1), eine bewegliche Formaufspannplatte (2) und eine Endplatte (3), wobei die Düsenplatte (1) und die Endplatte (3) über Säulen (4), auf welchen die bewegliche Formaufspannplatte (2) verschiebbar geführt ist, miteinander verbunden sind und wobei zwischen der Endplatte (3) und der beweglichen Formaufspannplatte (2) eine Kniehebelanordnung (5) vorgesehen ist, auf die eine Antriebseinheit (6) wirkt,
**dadurch gekennzeichnet,**
**daß** sich zwischen der Endplatte (3) und der beweglichen Formaufspannplatte (2) ein längenveränderbares Kapselelement (13) erstreckt.

2. Schließeinheit nach Anspruch 1,
**dadurch gekennzeichnet,**
**daß** das Kapselelement (13) als Faltenbalg ausgeführt ist.

3. Schließeinheit nach Anspruch 1,
**dadurch gekennzeichnet,**
**daß** das Kapselelement (13) als eine mindestens zwei teleskopisch zueinander verschiebbare tunnelartige Bleche (14, 15, 16) umfassende Verkleidung ausgeführt ist.

4. Schließeinheit nach einem der Ansprüche 1 bis 3,
**dadurch gekennzeichnet,**
**daß** das Kapselelement (13) in seinem unteren Bereich offen ausgeführt ist.

5. Schließeinheit nach Anspruch 4,
**dadurch gekennzeichnet,**
**daß** die untere Öffnung des Kapselelements oberhalb einer Auffangwanne angeordnet ist.

6. Schließeinheit nach einem der Ansprüche 1 bis 3,
**dadurch gekennzeichnet,**
**daß** ein allseits geschlossenes Kapselelement mit einem Bodenablaß und einer Entlüftung vorgesehen ist.

7. Schließeinheit nach einem der Ansprüche 1 bis 6,
**dadurch gekennzeichnet,**
**daß** sich das Kapselelement (13) zwischen der Endplatte (3) und der beweglichen Formaufspannplatte (2) auf den Säulen (4) abstützt.

8. Schließeinheit nach einem der Ansprüche 1 bis 7,
**dadurch gekennzeichnet,**
**daß** sich die Längenveränderbarkeit des Kapselelements (13) auf einen Teilbereich seiner Länge beschränkt.

9. Schließeinheit nach einem der Ansprüche 1 bis 8,
**dadurch gekennzeichnet,**
**daß** zur Schmierölversorgung der Gelenke der Kniehebelanordnung (5) eine intermittierend arbeitende Schmierungspumpe vorgesehen ist, wobei die Schmierungsintervalle so bemessen sind, daß 2000 Arbeitszyklen pro Schmierung nicht überschritten werden.

10. Schließeinheit nach einem der Ansprüche 1 bis 8,
**dadurch gekennzeichnet,**
**daß** zur Schmierölversorgung der Gelenke der Kniehebelanordnung (5) eine kontinuierlich arbeitende Schmierungspumpe vorgesehen ist.

## Claims

1. A clamping unit for a three-plate injection moulding machine, comprising a nozzle plate (1), a movable mould platen (2) and an end plate (3), wherein the nozzle plate (1) and the end plate (3) are connected to one another by means of columns (4), on which the movable mould platen (2) is displaceably guided, and wherein a toggle lever arrangement (5) that is acted upon by a drive unit (6) is provided between the end plate (3) and the movable mould platen (2),
**characterized in that**
an encapsulation element (13) of variable length extends between the end plate (3) and the movable mould platen (2).

2. The clamping unit according to Claim 1,
**characterized in that**
the encapsulation element (13) is realized in the form of a bellow.

3. The clamping unit according to Claim 1,
**characterized in that**
the encapsulation element (13) is realized in the form of a casing that comprises at least two tunnel-like sheet metal sections (14, 15, 16) that can be telescopically displaced relative to one another.

4. The clamping unit according to one of Claims 1-3,
**characterized in that**
the lower region of the encapsulation element (13) is open.

5. The clamping unit according to Claim 4,
**characterized in that**
the lower opening of the encapsulation element is arranged above a drain tray.

6. The clamping unit according to one of Claims 1-3,
**characterized in that**
an encapsulation element which is closed on all sides is provided with a bottom drain and ventilated.

7. The clamping unit according to one of Claims 1-6,
**characterized in that**
the encapsulation element (13) is supported on the columns (4) between the end plate (3) and the movable mould platen (2).

8. The clamping unit according to one of Claims 1-7,
**characterized in that**
the length of the encapsulation element (13) can only be varied over part of its length.

9. The clamping unit according to one of Claims 1-8,
**characterized in that**
an intermittently operating lubricating pump is provided for supplying lubricating oil to the joints of the toggle lever arrangement (5), wherein the lubricating intervals are chosen such that 2000 operating cycles per lubrication are not exceeded.

10. The clamping unit according to one of Claims 1-8,
**characterized in that**
a continuously operating lubricating pump is provided for supplying lubricating oil to the joints of the toggle lever arrangement (5).

## Revendications

1. Unité de fermeture pour une machine à mouler par injection à trois plateaux, comprenant un porte-filière (1), un plateau porte-outillage (2) mobile et un plateau d'extrémité (3), le porte-filière (1) et le plateau d'extrémité (3) étant reliés entre eux au moyen de colonnes (4), sur lesquelles le plateau porte-outillage (2) mobile est guidé de façon coulissante, et moyennant quoi il est prévu entre le plateau d'extrémité (3) et le plateau porte-outillage (2) mobile un dispositif à genouillère (5), sur lequel une unité d'entraînement (6) agit,
**caractérisée en ce que**
un élément d'encapsulage (13) variant en longueur s'étend entre le plateau d'extrémité (3) et le plateau porte-outillage (2) mobile.

2. Unité de fermeture selon la revendication 1,
**caractérisée en ce que**
l'élément d'encapsulage (13) est conçu comme un soufflet.

3. Unité de fermeture selon la revendication 1,
**caractérisée en ce que**
l'élément d'encapsulage (13) est réalisé comme un habillage comprenant au moins deux tôles (14, 15, 16) en forme de tunnel et coulissant de façon télescopique l'une par rapport à l'autre.

4. Unité de fermeture selon l'une quelconque des revendications 1 à 3,
**caractérisée en ce que**
l'élément d'encapsulage (13) est réalisé ouvert dans sa zone inférieure.

5. Unité de fermeture selon la revendication 4,
**caractérisée en ce que**
l'ouverture inférieure de l'élément de capsule est disposée au-dessus d'un bac collecteur.

6. Unité de fermeture selon l'une quelconque des revendications 1 à 3,
**caractérisée en que**
l'élément d'encapsulage fermé de tous côtés est prévu avec une évacuation au sol et un système de purge.

7. Unité de fermeture selon l'une quelconque des revendications 1 à 6,
**caractérisée en ce que**
l'élément d'encapsulage (13) s'appuie sur les colonnes (4) entre le plateau d'extrémité (3) et le plateau porte-outillage (2) mobile.

8. Unité de fermeture selon l'une quelconque des revendications s1 à 7,
**caractérisée en ce que**
la variabilité en longueur de l'élément d'encapsulage 13 se limite à une zone partielle de sa longueur.

9. Unité de fermeture selon l'une quelconque des revendications 1 à 8,
**caractérisée en que**,
pour l'alimentation en huile lubrifiante des articulations du dispositif à genouillère (5), il est prévu une pompe de graissage travaillant par intermittence, les intervalles de graissage étant dimensionnés de telle sorte que 2.000 cycles de travail par graissage ne sont pas dépassés.

10. Unité de fermeture selon l'une quelconque des revendications 1 à 8,
**caractérisée en que**,
pour l'alimentation en huile lubrifiante des articulations du dispositif à genouillère (5), il est prévu une pompe de graissage travaillant de façon continue.
